(19) **Europäisches Patentamt**

**European Patent Office**

**Office européen des brevets**

(11) **EP 1 310 415 B1**

(12) **EUROPÄISCHE PATENTSCHRIFT**

(45) Veröffentlichungstag und Bekanntmachung des Hinweises auf die Patenterteilung:
**11.01.2006 Patentblatt 2006/02**

(51) Int Cl.:
***B60T 8/00*** *(2006.01)*

(21) Anmeldenummer: **02020933.4**

(22) Anmeldetag: **19.09.2002**

(54) **Verfahren zur Fahrzeugsteuerung**

Vehicle controlling method

Méthode pour la commande d'un véhicule

(84) Benannte Vertragsstaaten:
**DE FR IT SE**

(30) Priorität: **09.11.2001 DE 10155204**

(43) Veröffentlichungstag der Anmeldung:
**14.05.2003 Patentblatt 2003/20**

(73) Patentinhaber: **ROBERT BOSCH GMBH**
**70442 Stuttgart (DE)**

(72) Erfinder:
• **Schuster, Thomas**
**74336 Brackenheim (DE)**
• **Kind, Werner**
**71706 Markgroeningen (DE)**
• **Mayer, Rainer**
**71263 Weil Der Stadt (DE)**
• **Kustosch, Mario**
**71665 Vaihingen/Enz (DE)**

(56) Entgegenhaltungen:
**DE-A- 19 654 769    DE-A- 19 704 841**

**Beschreibung**

Stand der Technik

Die Erfindung betrifft ein Verfahren zur Fahrzeugsteuerung gemäß Anspruch 1.

Aus der EP 507 072 B1 (US-Patent 5,351,776) ist ein elektronisches Steuersystem für ein Fahrzeug bekannt, bei welchem abhängig vom Fahrerwunsch und von Sollwerten aus Fahrerassistenzsystemen ein Sollbeschleunigungswert für die Längsbewegung des Fahrzeugs abgeleitet wird, welcher durch Steuerung des Antriebstrangs bzw. der Bremsanlage des Fahrzeugs eingestellt wird. Konkrete Angaben zur Koordination mehrerer, von unabhängigen Systemen ermittelten Sollbeschleunigungswerten, werden nicht angegeben.

Aus der deutschen Patentanmeldung 100 48 015 vom 26.09.2000 ist ein Steuersystem für eine Antriebseinheit bekannt, bei welchem ausgehend von Getriebeausgangs- oder Abtriebssolldrehmomenten Werten verschiedener Steuersysteme ein resultierender Sollmomentenwert zur Steuerung der Antriebseinheit erzeugt wird, der durch entsprechende Umsetzung in Stellgrößen der Antriebseinheit realisiert wird.

Beispielsweise aus der DE-A 196 16 732 (US-Patent 6,208,926) ist bekannt, ausgehend von einem Sollverzögerungswert, der vom Fahrer durch Betätigen des Bremspedals oder von Fahrerassistenzsystemen, wie beispielsweise einem adaptiven Fahrgeschwindigkeitsreglers, stammt, in ein Sollbremsmoment umzusetzen, welches durch Betätigen der Bremsanlage des Fahrzeugs realisiert wird.

Aus dem SAE-Paper Nr. 96 10 10 "Adaptive Cruise Control, System Aspects and Development Trends", 1996, von Hermann Winner, Stefan Witte, Werner Uhler und Bernd Lichtenberg ist ein adaptiver Fahrgeschwindigkeitsregler (Fahrgeschwindigkeitsregler mit Abstandsmessung) bekannt.

Aus der DE 197 04 841 A1 ist ein Verfahren und eine Vorrichtung zur Regelung der Längsdynamik eines Fahrzeugs bekannt, das eine Koordinationseinrichtung für Sollwerte für Bremse und/oder Motor umfasst. Ausgegangen wird von einem System, in dem verschiedene Komponenten zur Regelung der Längsdynamik eines Fahrzeugs beitragen und bei dem erfindungsgemäß diese Komponenten parallel zueinander Zwischensollwerte für Bremse und oder Motor erzeugen.

Aus der DE 196 54 769 A1 ist eine Verfahren und eine Vorrichtung zur Fahrzeugsteuerung bzw. -Regelung bekannt, bei dem eine Sollbeschleunigung aus mehreren Sollbeschleunigungen ermittelt wird, zum Einstellen einer vorgegebenen Sollbeschleunigung, zur Fahrzeugfolgeregelung, zur Erzeugung eines hochwertigen Geschwindigkeitssignals, zur Bearbeitung einer Sollgeschwindigkeit, zur Ansteuerung von Bremsventilen, zur günstigen Gestaltung von Übergangszuständen, zur Fahrzeugabstandssteuerung bzw.- Regelung, zur Bedienung eines Tempomaten und zur Einstellung der Kurvengeschwindigkeit.

Vorteile der Erfindung

Durch die beschriebene Koordination verschiedener Sollbeschleunigungswerte für die Längsbewegung wird eine modulare Anbindung unterschiedlicher Anwendungen, die auf die Fahrzeuglängsbewegung einwirken, ermöglicht.

Erfindungsgemäß wird durch die vorgesehene Schnittstelle auf der Basis von Beschleunigungswerten eine Entkopplung von auf die Fahrzeugslängsbewegung einwirkenden Anwendungen von Schnittstelle zur Motor-, Getriebe- oder Bremsensteuerung erreicht.

Erfindungsgemäß werden Anwendungen, die auf die Längsbewegung einwirken, zusammenbetrachtet, wobei sowohl Vortriebs- als auch Bremsleistung berücksichtigt wird. Eine voneinander unabhängige Betrachtung von Systemen für den Vortrieb und Systemen für die Verzögerung des Fahrzeugs, wie dies in bisherigen Systemen erfolgt, wird vermieden.

Somit werden die Anzahl der Schnittstellen zu den einzelnen, die Längsbewegung steuernden Systemen, wie beispielsweise Bremsanlage, Getriebesteuerung, Motorsteuerung, verringert.

Erfindungsgemäß werden die verschiedenen Beschleunigungs- bzw. Verzögerungswünsche in einem zentralen Koordinator zu resultierenden Beschleunigungswünschen für den Antrieb und Verzögerungswünschen für das Bremssystem verarbeitet. Dadurch wird es möglich, auf eine Vielzahl solcher Koordinatoren in einzelnen Anwendungen, die sowohl auf den Antriebs- als auch auf den Bremspfad zugreifen, zu verzichten. Eine Priorisierung und Weiterverarbeitung der resultierenden Steuersignale dieser einzelnen Anwendungskoordinatoren wird vermieden und somit übersichtlichere Strukturen und ein verringerter Arbeitsaufwand bereitgestellt.

Weitere Vorteile ergeben sich aus der nachfolgenden Beschreibung von Ausführungsbeispielen bzw. aus den abhängigen Patentansprüchen.

Zeichnung

Die Erfindung wird nachstehend anhand der in der Zeichnung dargestellten Ausführungsformen näher erläutert.

Dabei zeigt Figur 1 ein Übersichtsbild einer Steuereinrichtung, welche einen zentralen Vortriebskoordinator für die Fahrzeugslängsbewegung enthält, der die Längsbewegungswünsche verschiedener Assistenzsysteme und des Fahrers koordiniert. In Figur 2 ist ein erstes Ausführungsbeispiel eines solchen Vortriebskoordinators dargestellt. Figur 3 beschreibt eine vorteilhafte Ausführung für die Verteilung eines resultierenden Beschleunigungswunsches auf Antriebs- und Bremspfad. Figur 4 zeigt ein Ablaufdiagramm, welches ein zweites Ausführungsbeispiel für einen zentralen Vortriebskoordinator darstellt.

Beschreibung von Ausführungsbeispielen

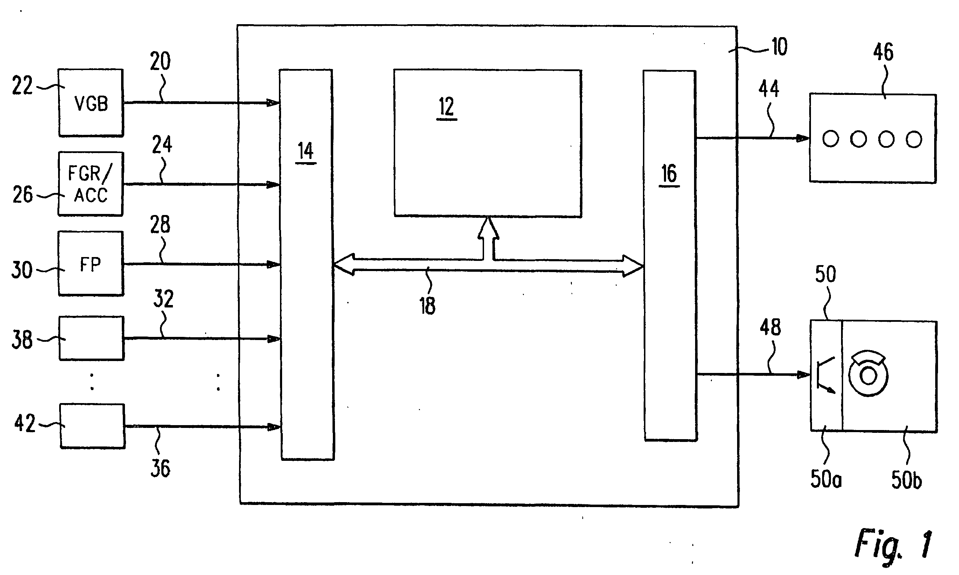

Figur 1 zeigt eine elektronische Steuereinheit 10, die je nach Ausführungsbeispiel eine Steuereinheit zur Motorsteuerung, zur Getriebesteuerung, zur Bremsensteuerung, eine zentrale Steuereinheit eines Fahrzeugsteuersystems oder eine andere Steuereinheit sein kann. Im dargestellten bevorzugten Ausführungsbeispiel handelt es sich bei der Steuereinheit 10 um eine Steuereinheit zur Steuerung des Antriebsmotors, wobei die Steuereinheit aus Mikrocomputer samt Speicher 12, Eingangschaltung 14 und Ausgangschaltung 16 besteht. Diese Elemente sind mit einem Kommunikationssystem 18 miteinander zum Datenaustausch verbunden. An die Eingangsschaltung 14 sind Eingangsleitungen angebunden, die die Steuereinheit 10 mit anderen Steuersystemen, die auf die Längsbewegung des Fahrzeugs Einfluss nehmen, und mit Messeinrichtungen zur Erfassung von Betriebsgrößen des Fahrzeugs, der Antriebseinheit, des Triebstrangs oder der Bremsanlage verbinden. Mit Blick auf das bevorzugte Ausführungsbeispiel verbindet eine erste Eingangsleitung 20 die Steuereinheit 10 mit einem Fahrgeschwindigkeitsbegrenzer (VGB) 22, eine Eingangsleitung 24 mit einem Fahrgeschwindigkeitsregler (FGR) bzw. einem adaptiven Fahrgeschwindigkeitsregler (ACC) 26. Über eine Eingangsleitung 28 wird der Steuereinheit 10 von einer Messeinrichtung 30 wenigstens eine Größe, die die Stellung eines vom Fahrer betätigbaren Bedienelements repräsentiert, zugeführt. Dieses Bedienelement ist beispielsweise ein Fahrpedal. Ferner sind Eingangsleitungen 32 bis 36 vorgesehen, die die Steuereinheit 10 mit Messeinrichtungen 38 bis 42 verbinden. Diese Messeinrichtungen ermitteln Signale, die weitere Betriebsgrößen des Fahrzeugs, des Antriebs oder der Bremsanlage repräsentieren. Als Beispiel seien hier genannt Motordrehzahl, Motortemperatur, der Status von Nebenverbrauchern, die nicht zum Antrieb des Fahrzeugs beitragen, Übersetzungsverhältnis im Triebstrang, etc.

Über Ausgangsleitungen 44, die von der Ausgangsschaltung 16 der Steuereinheit 10 wegführen, wird die Antriebseinheit 46 des Fahrzeugs mittels Stellgrößen für Leistungsparameter gesteuert. Ferner ist über eine Verbindungsleitung 48 eine Verbindung zu einem Bremsensteuersystem 50 vorgesehen, über die ein Verzögerungswunsch an die Steuereinheit 50a des Bremsensystems ausgegeben wird, welche die Bremsanlage 50b des Fahrzeugs betätigt. Ein solches Bremsensteuersystem 50 ist beispielsweise ein bekanntes elektrohydraulisches Bremssystem.

Im dargestellten Ausführungsbeispiel ist der nachfolgend beschriebene Vortriebskoordinator Teil der Steuereinheit 10, welche Stellgrößen zur Steuerung der Antriebseinheit 46 des Fahrzeugs bereitstellt. In anderen Ausführungsbeispielen ist dieser Koordinator Teil der Steuereinheit 50a des Bremsensystems, wobei dann ein entsprechendes Beschleunigungswunschsignal an eine Steuereinheit zur Steuerung der Antriebseinheit des Fahrzeugs ausgegeben wird. In wieder anderen Ausführungsbeispielen ist die Steuereinheit 10 eine zentrale Steuereinheit oder eine Steuereinheit eines Assistenzsystems, welche einen Verzögerungswunsch für ein Bremsensteuersystem ermittelt, andererseits ein Beschleunigungswunsch für ein Antriebssystem. Die Antriebseinheit 46 ist dabei je nach Ausführungsbeispiel ein Verbrennungsmotor oder ein Elektromotor.

Ferner ist in Figur 1 der Fahrgeschwindigkeitsbegrenzer 22 bzw. der Fahrgeschwindigkeitsregler 26 als separate Steuereinheiten dargestellt, die zur Ausführung ihrer Funktion jeweils eigene Mikrocomputer umfassen. In anderen Ausführungsbeispielen sind die beschriebenen Funktionen Programme des Mikrocomputers 12, wobei dann über die Eingangsleitungen lediglich Betätigungssignale des Fahrers übermittelt werden, während die Längsbewegungswunschsignale dieser Steuersysteme im Mikrocomputer 12 intern vorliegen.

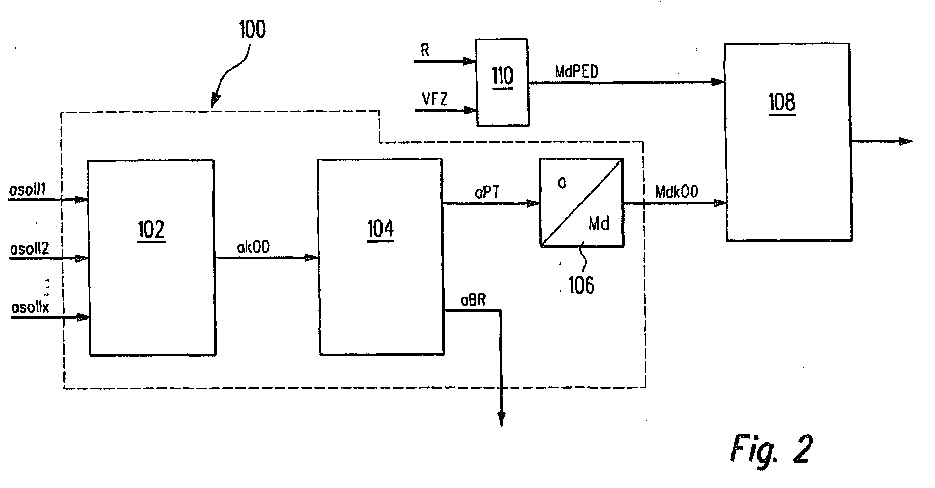

Über die Eingangsleitung 28 erhält die Steuereinheit 10 eine Größe, die die Stellung eines vom Fahrer betätigbaren Bedienelements, beispielsweise eines Fahrpedals, übermittelt. Aus diesem wird, wie beispielsweise im eingangsgenannten Stand der Technik ausgeführt, ein Sollmomentenwert abgeleitet, der unter Verknüpfung mit anderen Sollmomentenwerten in die Stellgrößen zur Steuerung der Antriebseinheit umgesetzt wird. Der adaptive Fahrgeschwindigkeitsregler 26 erzeugt Beschleunigungssollsignale. Ein Beispiel für eine solche Vorgehensweise ist aus dem im eingangsgenannten Stand der Technik beschriebene Art und Weise bekannt. Er übermittelt die Sollbeschleunigung an die Steuereinheit 10. Entsprechende Sollsignale bildet der beispielhaft dargestellte Fahrgeschwindigkeitsbegrenzer 22. Der Mikrocomputer 12 enthält dabei als Computerprogramm einen Vortriebskoordinator, der alle auf die Längsbewegung einwirkenden Sollsignale koordiniert, d.h. miteinander verknüpft und resultierende Beschleunigungs- und/oder Verzögerungssollsignale erzeugt. Ein Beispiel für einen solchen Längsbewegungskoordinator ist im Flussdiagramm der Figur 2 dargestellt. Die dargestellten Blöcke repräsentieren dabei Programme, Programmteile oder Programmschritte, während die Verbindungslinien den Informationsfluss darstellen.

Der Koordinator 100 besteht dabei im wesentlichen aus einer Auswahlstufe 102, einem Verteiler 104 und einem Element 106 (nicht notwendigerweise Bestandteil des Koordinators), in dem die Vortriebsbeschleunigung in ein Getriebeausgangsmoment, Abtriebsmoment oder Radmoment umgesetzt wird.

Der Auswahlstufe 102 werden beispielsweise von den oben genannten Steuersystemen verschiedene positive oder negative Beschleunigungssollwerte asoll1, asoll2 bis asollx übermittelt. Die Auswahlstufe wählt aus den zugeführten Sollbeschleunigungswerten einen resultierenden Sollbeschleunigungswert ak00 aus, der dem Verteiler 104 zugeführt wird. In einem bevorzugten Ausführungsbeispiel hat sich als Auswahlstrategie eine Minimalwertauswahl als geeignet erwiesen, so dass die resultierende Sollbeschleunigung ak00 dem kleinsten der zugeführten Sollbeschleunigungs- bzw. Verzögerungswerten entspricht. Der Verteiler 104 hat die Aufgabe, die resultierende Sollbeschleunigung (positiver oder negativer Wert) in eine Antriebsbeschleunigung aPT und/oder eine Bremsverzögerung aBR aufzuteilen. Die Bremsverzögerung aBR wird dabei direkt an die Beschleunigungsschnittstelle der Bremsanlage weitergeleitet, wo sie beispielsweise in der eingangsgenannten Art im Rahmen einer Verzögerungsregelung umgesetzt wird. Im Antriebsfall wird die Antriebsbeschleunigung aPT in ein Radwunschmoment Mdk00 umgerechnet (siehe Umsetzer 106). Die Umrechnung von Beschleunigung in Radmoment erfolgt dabei in einem Ausführungsbeispiel mit Hilfe der folgenden fahrdynamischen Gleichung:

$$\texttt{asoll * mfzg = FAN - FRO - FL - FST - FJ}$$

wobei mfzg die Fahrzeugmasse, FAN die Antriebskraft, FRO die Rollreibung, FL der Luftwiderstand, FST der Fahrwiderstand durch Hangabtrieb und FJ das Trägheitsmoment ist. Die genannten Größen der fahrdynamischen Gleichung werden dabei berechnet, adaptiert, gemessen oder als konstant angenommen. So wird beispielsweise die Fahrzeugmasse mittels eines entsprechenden Sensors gemessen, als konstant angenommen oder mittels Schätzverfahren adaptiert. In einer bevorzugten Ausführung wird das Sollradmoment bzw. das Sollgetriebeausgangsmoment oder die Sollantriebskraft aus der Sollbeschleunigung durch einen abgeschätzten, die sonstigen Größen berücksichtigenden Schätzgröße berechnet, die iterativ gebildet wird. Dazu wird aus der Istgeschwindigkeit durch zeitliche Ableitung die Istbeschleunigung bestimmt. Unter Berücksichtigung der Fahrzeugmasse wird die Istantriebskraft bestimmt. Diese Istgröße wird von der aus Sollbeschleunigung und Fahrzeugmasse, korrigiert mit der Schätzgröße, gebildeten Sollantriebskraft abgezogen. Abhängig von der Differenz, die ggf gefiltert wird, wird die Schätzgtöße gebildet, die Dann zur Bildung der Sollantriebskraft der aus Sollbeschleunigung und Masse abgeleiteten Kraftgröße aufgeschaltet wird. In einer Ausführung wird der Luftwiderstand abhängig von Fahrzeuggeschwindigkeit berechnet und als separate Größe berücksichtigt.

Auf diese Weise wird im Umsetzer 106 aus der Sollbeschleunigung aPT für den Antriebstrang ein Sollradmoment Mdk00 ermittelt. Dieses Sollradmoment wird einer weiteren Auswahlstufe 108 zugeführt. In dieser Auswahlstufe wird ein resultierendes Radmoment aus den zugeführten Sollradmomenten ermittelt, die im dargestellten Beispiel der Figur 2 aus dem Sollradmoment Mdk00 des Koordinators 100 sowie aus dem Fahrerwunschmoment MdPED besteht. Letzteres wird beispielsweise mittels eines Kennfelds 110 aus Fahrpedalstellung β und Fahrzeuggeschwindigkeit VFZ abgleitet.

Im bevorzugten Ausführungsbeispiel ist die Auswahlstufe 108 eine Maximalwertauswahlstufe, d.h. das resultierende Sollmoment ist der größere der beiden zugeführten Werte. Bei der Koordination der Sollmomente werden in anderen Ausführungen die aus dem eingangsgenannten Stand der Technik bekannten Sollmomente ergänzend herangezogen.

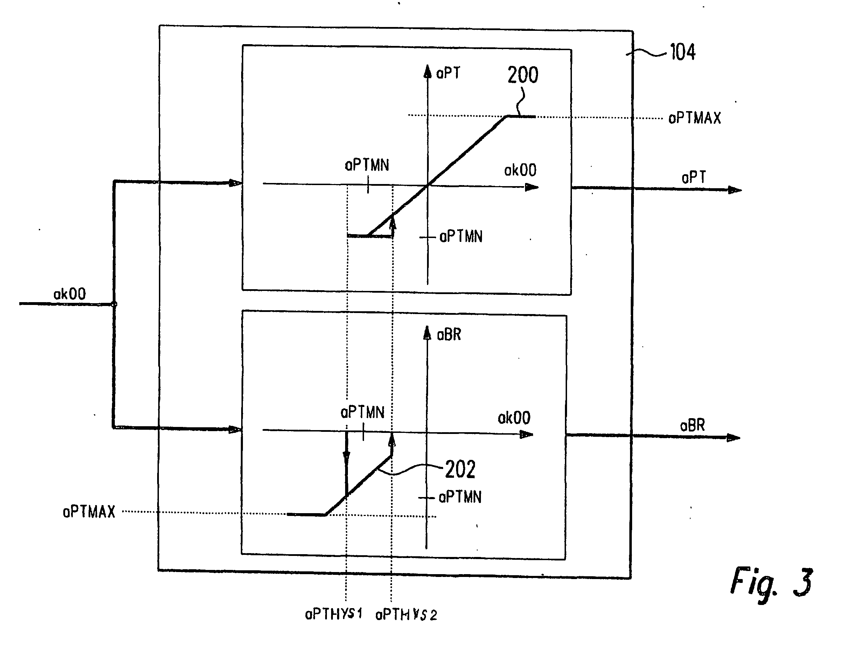

Eine bevorzugte Ausgestaltung des Verteilers 104 ist im Ablaufdiagramm der Figur 3 skizziert. Danach besteht der Verteiler 104 im wesentlichen aus zwei Kennlinien 200 und 202. Den Kennlinien wird der resultierende Beschleunigungswunsch ak00 zugeführt. In der Kennlinie 200 ist die Sollantriebsbeschleunigung aPT über der resultierenden Beschleunigung ak00 aufgetragen, während in der Kennlinie 202 die Sollverzögerung aBR über der resultierenden Beschleunigung ak00 aufgetragen ist. Die Kennlinie des bevorzugten Ausführungsbeispiels sind jeweils begrenzte Ursprungsgeraden. Die Begrenzungen rühren von der maximalen Antriebsleistung und der maximalen Bremskraft her. So kann der Antrieb durch Bereitstellen eines Schleppmoments der Antriebseinheit eine minimale Verzögerung aPTMN bereitstellen. Zusätzlich zur Bereitstellung des Schleppmomentes des Verbrennungsmotors wird in einem bevorzugten Ausführungsbeispiel eine weitere Verzögerung durch Aktivieren von die Antriebseinheit belasteten Nebenaggregaten, beispielsweise Klimaanlage, Heckscheibenheizung, Startergenerator, etc. erzeugt und bei der Bestimmung der minimalen Beschleunigung aPTMN berücksichtigt. Die minimale Triebstrangbeschleunigung aPTMN wird also abhängig vom Betriebszustand der Antriebseinheit bzw. der Nebenaggregate vorgegeben, beipsielsweise aus Kennlinien ermittelt. So ist beispielsweise in Niedriglastbereichen bzw. bei niedriger Drehzahl die durch die Antriebseinheit einstellbare Verzögerung geringer als bei höheren Drehzahlen.

Eine Maximalbegrenzung der Kennlinie 200 ergibt die maximal mögliche Antriebleistung, die aus der maximal möglichen Antriebskraft ermittelt wird.

Umgekehrt ist die Kennlinie 202 zu Verzögerungswerten hin durch die maximale Verzögerung, die bei maximalem Bremsdruck der Bremsanlage einstellbar ist, begrenzt. Wird also eine Verzögerung als resultierenden Beschleunigungswunsch gefordert, die oberhalb der maximalen Verzögerung aPTMN durch den Antrieb ist, so wird diese allein durch Vorgabe der Solltriebstrangbeschleunigung realisiert. Ist die geforderte Verzögerung jedoch größer als die maximale Antriebsverzögerung, so ist ein Bremseneingriff notwendig, der parallel zum Aufbau des Schleppmoments durch den Motor durchgeführt wird.

In einem bevorzugten Ausführungsbeispiel sind Bremseneingriff und Antriebsteuerung voneinander durch eine Hysterese entprellt. Diese Hysterese ist als Beispiel im Ablaufdiagramm der Figur 3 dargestellt.

Die maximale Beschleunigung durch die Antriebseinheit ist ebenfalls betriebsgrößenabhängig und wird beispielsweise vom eingelegten Gang und der Last der Nebenaggregate vorgegeben.

Im bevorzugten Ausführungsbeispiel besteht der Verteiler 104 aus den oben dargestellten Kennlinien, die als Ursprungsgeraden dargestellt sind. Je nach Ausführungsform lassen sich andere Realisierungen finden, beispielsweise im Rahmen von Berechnungsvorgängen oder in Verbindung mit Kennlinien, die eine andere Abhängigkeit der Sollbeschleunigungen von der resultierenden Sollbeschleunigung, z.B. eine von der geradlinigen Abhängigkeit abweichende Abhängigkeit, aufweisen.

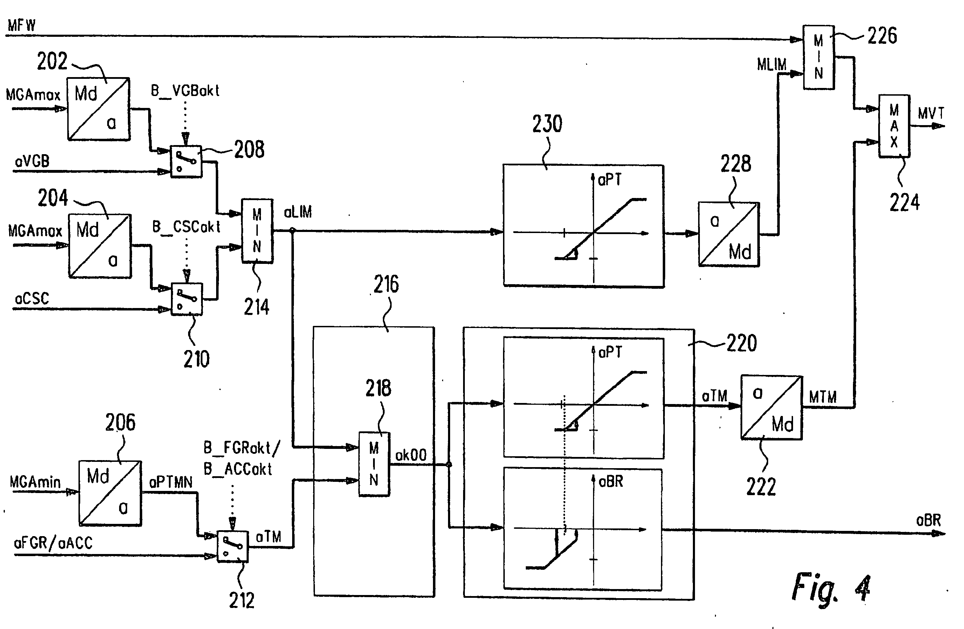

In Figur 4 ist ein Ablaufdiagramm für ein zweites Ausführungsbeispiel einer Vortriebskoordination dargestellt. Auch hier sind die einzelnen Blöcke Programme, Programmteile oder Programmschritte, die Verbindungslinien repräsentierenden Informationsfluss.

In der Ausführungsform der Figur 4 werden alle bekannten Vortriebsanforderungen in einem zentralen Koordinator verarbeitet. Diese Anforderungen werden wie folgt klassifiziert. Zum einen der Wunsch des Fahrers, den er durch Betätigen des Fahrpedals ausdrückt. Dann Anforderungen zur Begrenzung der Vorwärtsbewegung, wie beispielsweise die Anforderung eines variablen Geschwindigkeitsbegrenzers, einer Maximalgeschwindigkeitsbegrenzung, eine automatische Notbremsung, etc. und schließlich Vortriebsanforderungen, die sowohl Beschleunigung als auch Verzögerung zur Folge haben können, wie beispielsweise ein adaptiver Fahrgeschwindigkeitsregler, ein Tempomat mit Bremseneingriff oder evtl. ein intelligenter Parkpilot.

Dem in Figur 4 dargestellten Vortriebskoordinator werden als Eingangsgrößen im gezeigten Ausführungsbeispiel ein abhängig von der Fahrpedalstellung gebildetes Fahrerwunschmoment MFW zugeführt, soweit vorhanden Sollbeschleunigungen eines Fahrgeschwindigkeitsbegrenzers aVGB, eines Kurvengeschwindigkeitsbegrenzers aCSC, eines Tempomaten oder adaptiven Fahrgeschwindigkeitsregler aFGR bzw. aACC, eine Größe für das maximal mögliche Getriebeausgangsmoment MGAMAX, eine Größe für das minimal mögliche Getriebeausgangsmoment MGAMIN sowie Signale, die den aktiven Betriebszustand des Fahrgeschwindigkeitsbegrenzers B_VGBakt, des Kurvengeschwindigkeitsbegrenzers B_CSCakt, des Tempomaten B_FGRakt und/oder des adaptiven Fahrgeschwindigkeitsreglers B_ACCakt repräsentieren.

Das maximal mögliche Getriebeausgangsmoment MGAMAX wird dabei in Abhängigkeit beispielsweise der Drehzahl der Antriebseinheit, der Übersetzung im Triebstrang, etc. gebildet. Aus ihm wird auch die im Verteiler zugrunde gelegte maximal mögliche Antriebstrangbeschleunigung aPTMX abgeleitet. Das minimale mögliche Ausgangsmoment MGAMIN wird berechnet aus einem Korrekturwert eines Leerlaufreglers, den Verlustmomenten der Antriebseinheit, die nicht zum Antrieb genutzt werden, etc. Im Schiebebetriebszustand entspricht dieses minimal mögliche Moment dem negativen Wert des Verlustmomentes, d.h. dem Anteil, den der Motor zur Überwindung seiner inneren Reibung und/oder zum Betrieb von nicht zum Antrieb beitragenden Nebenaggregaten aufbringen muss.

Die Umrechnung von Momenten (M) bzw. Kräften in Beschleunigungen erfolgt mittels des oben dargestellten Zusammenhangs. Im Rahmen der Umsetzer 202, 204 und 206, die im bevorzugten Ausführungsbeispiel wie oben erwähnt auf der Basis der fahrdynamischen Gleichung arbeiten (MFZG * a = M/ÜA - FRO - FL - FST - FJ - FBR), werden die maximale Antriebsstrangbeschleunigung aPTMAX aus dem maximalen und die minimale Anstriebsstrangbeschleunigung aPTMN aus dem minimalen Getriebeausgangsmoment gebildet.

In der vorstehend beschriebenen Gleichung bildet M das Getriebeausgangsmoment, ÜA das Übersetzungsverhältnis des Differenzials und des Rads, sowie FBR die Bremskraft. Diese Werte werden von den entsprechenden Steuersystemen zur Verfügung gestellt, M von der Motorsteuerung, ÜA von einer Getriebesteuerung oder der Motorsteuerung unter Beachtung von Drehzahl und Geschwindigkeit, FBR von der Bremsensteuerung.

Die maximal mögliche Antriebsbeschleunigung wird einem Schaltelement 208 zugeführt, dem ferner die Sollbeschleunigung des Fahrgeschwindigkeitsbegrenzers aVGB zugeführt ist. Entsprechend wird die in 204 gebildete maximal mögliche Antriebsbeschleunigung dem Schaltelement 210 zugeführt, dem ferner soweit vorhanden die Sollbeschleunigung aCSC des Kurvengeschwindigkeitsbegrenzers zugeführt ist. Die in 206 gebildete minimale Antriebsbeschleunigung wird einem Schaltelement 212 zugeführt, dem soweit vorhanden der Sollbeschleunigungswert des Tempomaten aFGR oder des adaptiven Fahrgeschwindigkeitsregler aACC zugeführt wird. Ist das jeweilige Assistenzsystem nicht aktiv bzw. nicht vorhanden, so stehen die Schaltelemente 208 bis 212 in der gezeigten Position, so dass jeweils maximale bzw. minimale Beschleunigungswerte weiterverarbeitet werden. Ist eines der Systeme aktiv, so schaltet das entsprechende Schaltelement in die andere Position, so dass die jeweilige Sollbeschleunigung weiterverarbeitet wird. Anforderungen, die zur Begrenzung der Vorwärtsbewegung dienen, wie beispielsweise die Sollbeschleunigungen des Fahrgeschwindigkeitsbegrenzers und des Kurvengeschwindigkeitsbegrenzers werden einer Minimalwertauswahlstufe 214 zugeführt. Der kleinere der beiden Sollwerte bildet dann eine Sollgrenzbeschleunigung aLIM. Ist keine der begrenzenden Systeme vorhanden, wird die maximal mögliche Antriebsbeschleunigung als Begrenzungsbeschleunigung aLIM vorgegeben, so dass dieser Bereich des Koordinators keinen Einfluss auf die weitere Bestimmung der Sollwerte hat. Der Begrenzungssollwert aLIM wird der Auswahlstufe 216 zugeführt, die im bevorzugten Ausführungsbeispiel wie auch oben dargestellt aus der Minimalwertauswahlstufe 218 besteht. Die zweite dieser Minimalwertauswahlstufe zugeführte Größe ist die Beschleunigung aTM, die aus der Sollbeschleunigung einer Vortriebsanforderung ausgewählt wird, die sowohl Beschleunigung als auch Verzögerung zur Folge haben kann. Auch hier gilt, dass bei inaktiver oder nicht vorhandener Anwendung als Sollbeschleunigung aTM die minimale Schleppbeschleunigung aPTMN vorgegeben wird, so dass wie nachfolgend zu erkennen ist diese Schnittstelle ebenfalls keinen Einfluss auf die Vorgabe der Sollmomente hat. In der Minimalwertauswahlstufe 218 wird der kleinere der zugeführten Sollbeschleunigungswerte als resultierender Sollbeschleunigungswert aKOO ausgewählt. Dieser wird dem Verteiler 220 zugeführt, welcher im wesentlichen dem anhand der Ausführung der Figur 3 dargestellten Lösung entspricht.

Im bevorzugten Ausführungsbeispiel enthält die Auswahlstufe 206 zusätzlich zur Minimalwertauswahlstufe weitere zusätzliche Funktionalitäten, beispielsweise eine Gradientenbegrenzung der Beschleunigung, z.B. zur Glättung der Übergänge. Dabei wird nur eine maximale Änderung des Beschleunigungssollwertes zugelassen. Darüber gehende Änderungen des Beschleunigungssollwertes kommen nicht zur Wirkung.

Wie oben beschrieben werden im Verteiler 220 eine Sollbeschleunigung aBR für die verzögernden Systeme, beispielsweise eine Bremsensteuerung, ermittelt sowie eine Beschleunigung aTM für den Antrieb. Erstere wird über eine Schnittstelle an ein Bremsensteuersystem abgegeben, während die Sollantriebsbeschleunigung in einem Umsetzer 222 in ein Sollantriebsmoment MTM, vorzugsweise ein Sollradmoment oder ein Sollgetriebeausgangsmoment umgerechnet wird. Dabei wird beispielsweise die oben genannte Gleichung eingesetzt.

Das Sollantriebsmoment MTM wird einer Maximalwertauswahlstufe 224 zugeführt. Diese Maximalauswahlstufe hat die Aufgabe, das Überreiten der Tempomatanforderung durch den Fahrer zu gewährleisten. Ist die Fahrervorgabe, die aus der Minimalwertauswahlstufe 226 kommt, größer als die in 222 ermittelte Sollmomentengröße, so wird diese als Vortriebsollmoment MVT zur Weiterverarbeitung ausgegeben, andernfalls die Sollmomentengröße aus 222. Zur Begrenzung des Fahrerwunschmoments ist die Minimalwertauswahlstufe 226 vorgesehen, wobei das Fahrerwunschmoment in Abhängigkeit der begrenzenden Systeme Fahrgeschwindigkeitsbegrenzer, Kurvengeschwindigkeitsbegrenzer begrenzt wird. Dies ist in Figur 4 derart realisiert, dass als zweite Eingangsgröße der Minimalwertauswahlstufe 226 ein Begrenzungsmoment MLIM zugeführt wird, welches in dem Umsetzer 228 aus einer Antriebsollbeschleunigung gebildet wird. Die wird wiederum aus der Grenzbeschleunigung aLIM nach Maßgabe einer Kennlinie 230 ermittelt. Diese Kennlinie entspricht dem Antriebsast des Verteilers 220, der Beschleunigungswerte garantiert, die durch den Triebstrang realisiert werden können.

Es lassen sich folgende Fälle unterscheiden:

$$\texttt{MFW > MLIM > MTM}$$

Dies hat zur Folge, dass der Sollvortriebsmoment MVT der Sollbegrenzungsmoment MLIM ist. Der Fahrer überreitet also den Tempomaten und wird dabei begrenzt.

$$\texttt{MLIM > MTM > MFW}$$

Dies hat zur Folge, dass der Vortriebswunsch MVT durch den Momentenwert MTM gebildet wird, d.h. der Tempomat setzt sich gegen den Fahrerwunsch durch, es gibt keine Begrenzung.

$$\texttt{MTM > MFW > MLIM}$$

Dies bedeutet, dass das Vortriebsollmoment MVT dem Begrenzungssollmoment MLIM entspricht. Sowohl der Fahrerwunsch als auch die Vorgabe des Tempomaten werden begrenzt.

```
MLIM > MFW > MTM
```

Dies bedeutet, dass der Vortriebswunsch MVT durch den Fahrerwunsch MFW gebildet wird. Der Fahrer überreitet den Tempomat, es gibt keine Begrenzung.

```
MTM > MLIM > MFW
```

Der Vortriebswunsch MVT entspricht dem Begrenzungsmoment MLIM. Der Tempomat setzt sich gegen den Fahrerwunsch durch und wird begrenzt.

Ist kein Fahrerwunsch vorhanden und ein Bremseneingriff durch den Tempomaten angefordert, so wird die Sollverzögerung aBR durch den Sollwert aTM des Tempomaten vorgegeben, während als Vortriebswunsch MVT dem minimal möglichen Vortriebswunsch MGAMIN, der aus der minimal möglichen Beschleunigung APTMN gebildet ist, sich ergibt.

Beim Überreiten eines Bremseneingriffs des Tempomaten durch den Fahrerwunsch ergibt sich als Sollvortriebsmoment MVT der Fahrerwunsch MFW, während die Sollverzögerung aBR = Null ist. Dazu ist es erforderlich, dass der Tempomat das Überreiten durch den Fahrerwunsch erkennt und den Bremseneingriff abbricht. Eine entsprechende Information ist bei vorhandenem Fahrerwunsch und vorhandenem Bremseingriff an den Tempomaten abzugeben.

Ein Bremseingriff durch den Begrenzer ergibt eine Sollverzögerung aBR, die der Sollbegrenzungsverzögerung aLIM entspricht, während das Sollvortriebsmoment wie im erst genannten Fall dem minimal möglichen Getriebeausgangsmoment MGAMIN entspricht.

**Patentansprüche**

1. Verfahren zur Fahrzeugsteuerung, wobei die Antriebseinheit (46) des Fahrzeugs und/oder die Bremsanlage (50) des Fahrzeugs nach Maßgabe eines Vorgabewertes gesteuert werden, wobei dieser Vorgabewert eine Beschleunigung des Fahrzeugs repräsentiert, dass dieser Vorgabewert mittels eines Koordinators (100) aus wenigstens zwei, die Beschleunigung des Fahrzeugs repräsentierenden Vorgabewerten ausgewählt wird, dass der resultierende Beschleunigungsvorgabewert einem Verteiler (104) zugeführt wird, in welchem der Beschleunigungsvorgabewert in einen Beschleunigungsvorgabewert für die Triebstrangsteuerung und einen Beschleunigungsvorgabewert für die Bremsensteuerung umgesetzt wird, und dass der Verteiler eine Zuordnung des resultierenden Beschleunigungsvorgabewertes zum Beschleunigungsvorgabewert für den Triebstrang und eine Zuordnung des resultierenden Beschleunigungsvorgabewertes zum Verzögerungssollwert für die Bremse umfasst, **dadurch gekennzeichnet, dass** die Zuordnungen derart gewählt sind, dass der Beschleunigungswunsch solange durch Steuerung des Antriebstrangs bereitgestellt wird, solange durch den Triebstrang nicht das maximale Schleppmoment eingestellt ist.

2. Verfahren nach Anspruch 1, **dadurch gekennzeichnet, dass** die wenigstens zwei Beschleunigungsvorgabewerte von einem Fahrgeschwindigkeitsbegrenzer (22), einem Fahrgeschwindigkeitsregler (26), einem Kurvengeschwindigkeitsbegrenzer stammen.

3. Verfahren nach einem der vorhergehenden Ansprüche, **dadurch gekennzeichnet, dass** die Beschleunigungsvorgabewerte zur Bildung eines resultierenden Beschleunigungsvorgabewertes einer Minimalwertauswahl unterzogen werden.

4. Verfahren nach einem der vorhergehenden Ansprüche, **dadurch gekennzeichnet, dass** die Zuordnungen Ursprungsgeraden sind, die auf Maximal- und Minimalwerte begrenzt sind.

5. Verfahren nach einem der vorhergehenden Ansprüche, **dadurch gekennzeichnet, dass** die erste Beschleunigungsvorgabegröße die Beschleunigungsvorgabegröße eines Tempomaten, die zweite Beschleunigungsvorgabegröße eine Vorgabegröße ist, die aus begrenzenden Funktionen ausgewählt ist.

6. Verfahren nach einem der vorhergehenden Ansprüche, **dadurch gekennzeichnet, dass** die Sollbeschleunigung der begrenzenden Funktionen und die Antriebsbeschleunigung der Koordination jeweils in Sollmomente umgerechnet werden, die zur Bildung eines resultierenden Sollvortriebsmoments mit dem Fahrerwunschmoment verknüpft werden.

**Claims**

1. Method for controlling a vehicle, wherein the drive unit (46) of the vehicle and/or the brake system (50) of the vehicle are controlled in accordance with a predefined value, wherein this predefined value represents an acceleration of the vehicle, wherein this predefined value is selected, by means of a coordinator (100) from at least two predefined values which represent the acceleration of the vehicle, wherein the resulting predefined acceleration value is fed to a distributor (104) in which the predefined acceleration value is converted into a predefined acceleration value for controlling the drive train, and into a predefined acceleration value for controlling the brakes, and wherein the distributor comprises an assignment of the resulting predefined acceleration value to the predefined acceleration value for the drive train, and an assignment of the resulting predefined acceleration value to the set point deceleration value for the brakes, **characterized in that** the assignments are selected such that the acceleration request is made available by controlling the drive train for as long as the maximum drive torque is not set by the drive train.

2. Method according to Claim 1, **characterized in that** the at least two predefined acceleration values originate from a driving speed limiter (22), a driving speed controller (26) and a bend speed limiter.

3. Method according to one of the preceding claims, **characterized in that** the predefined acceleration values are subjected to a minimum value selection in order to form a resulting predefined acceleration value.

4. Method according to one of the preceding claims, **characterized in that** the assignments are lines which pass through the origin and are limited to maximum and minimum values.

5. Method according to one of the preceding claims, **characterized in that** the first predefined acceleration value is the predefined acceleration value of a cruise controller, the second predefined acceleration value is a predefined value which is selected from limiting functions.

6. Method according to one of the preceding claims, **characterized in that** the set point acceleration of the limiting functions and the drive acceleration of the coordination are each converted into set point torques which are logically combined with the driver's requested torque in order to form a resulting set point propulsion torque.

**Revendications**

1. Procédé pour commander un véhicule, selon lequel l'unité d'entraînement (46) du véhicule et/ou l'installation de freinage (50) du véhicule sont commandées en fonction d'une valeur prédéfinie, cette valeur prédéfinie représentant une accélération du véhicule du fait qu'elle est sélectionnée à l'aide d'un coordinateur (100) à partir d'au moins deux valeurs prédéfinies qui représentent l'accélération du véhicule et que la valeur prédéfinie d'accélération résultante est acheminée à un distributeur (104) dans lequel elle est convertie en une valeur prédéfinie d'accélération pour commander la ligne d'actionnement et en une valeur prédéfinie d'accélération pour commander les freins et le distributeur associe la valeur prédéfinie d'accélération résultante à la valeur prédéfinie d'accélération pour la ligne d'actionnement et associe la valeur prédéfinie d'accélération résultante à la valeur de décélération prescrite pour le frein,
**caractérisé en ce que**
les associations sont choisies de telle manière que le souhait d'accélération est indiqué en commandant la ligne de transmission tant que le couple de traction maximal n'est pas réglé par la ligne d'actionnement.

2. Procédé selon la revendication 1,
**caractérisé en ce que**
les au moins deux valeurs prédéfinies d'accélération proviennent d'un limiteur de vitesse de conduite (22), d'un régulateur de vitesse de conduite (26), d'un limiteur de vitesse de virage.

3. Procédé selon l'une des revendications précédentes,
**caractérisé en ce que**
les valeurs prédéfinies d'accélération sont soumises à une sélection de valeur minimale pour former une valeur prédéfinie d'accélération résultante.

4. Procédé selon l'une des revendications précédentes,
**caractérisé en ce que**

les associations sont des droites d'origine limitées quant aux valeurs maximales et aux valeurs minimales.

5. Procédé selon l'une des revendications précédentes,
**caractérisé en ce que**
la première grandeur prédéfinie d'accélération est la grandeur prédéfinie d'accélération d'un régulateur de vitesse, la deuxième grandeur prédéfinie d'accélération est une grandeur prédéfinie sélectionnée à partir de fonctions limitatives.

6. Procédé selon l'une des revendications précédentes,
**caractérisé en ce que**
l'accélération prescrite des fonctions limitatives et l'accélération d'entraînement de la coordination sont chacune transformées en couples prescrits liés au couple que souhaite le conducteur pour former un couple de traction prescrit résultant.

22 — | VGB |
20
26 — | FGR/ ACC |
24
30 — | FP |
28
38 — | |
32
42 — | |
36

14

12

18

16

10

44

46

○ ○ ○ ○

48

50

50a    50b

*Fig. 1*

EP 1 310 415 B1

Fig. 2

EP 1 310 415 B1

Fig. 3

Fig. 4

EP 1 310 415 B1

13